# EUROPÄISCHE PATENTSCHRIFT

(11) **EP 3 936 346 B1**
(45) Veröffentlichungstag und Bekanntmachung des Hinweises auf die Patenterteilung: **15.03.2023**
(21) Anmeldenummer: 21180645.0
(22) Anmeldetag: 21.06.2021
(51) Int. Cl.: B60B 33/02, B60B 33/00

(54) **ROLLE FÜR APPARATE, MÖBEL UND INSBESONDERE MEDIZINGERÄTE**
CASTER FOR APPARATUSES, FURNITURE AND IN PARTICULAR MEDICAL DEVICES
ROULETTE POUR APPAREILS, MEUBLES ET EN PARTICULIER APPAREILS MÉDICAUX

(30) Priorität: 07.07.2020 DE 102020117833
(43) Veröffentlichungstag der Anmeldung: 12.01.2022
(73) Patentinhaber: Steinco Paul vom Stein GmbH, 42929 Wermelskirchen (DE)
(72) Erfinder: Weichbrodt, Tobias, 42929 Wermelskirchen (DE); Delan, Thorsten, 42929 Wermelskirchen (DE)
(74) Vertreter: Ostriga Sonnet Wirths & Vorwerk

(56) Entgegenhaltungen:
- DE-T2- 69 303 763
- DE-U1- 20 317 456
- US-B2- 8 079 606

## Beschreibung

Die Erfindung betrifft eine Rolle für Apparate, Möbel und insbesondere Medizingeräte, mit einem Tragteil, welches aus einem Fußteil und einem Kopfteil gebildet ist, das einen Befestigungsbolzen aufnimmt und dessen Fußteil eine Radachse lagert, an der mindestens ein Rad angeordnet ist, wobei die Rolle einen Richtungsfeststeller aufweist, dass die Rolle ein bewegliches Blockierelement für den Richtungsfeststeller aufweist, das zumindest mittelbar mit dem Rad im Reibkontakt steht und das die sich aus dem Reibkontakt ergebene Reibkraft bei Bewegung der Rolle in y-Richtung eine Richtungsfeststellung in y-Richtung hervorruft.

Beispielsweise aus der US 8 079 606 B2, der DE 203 17 456 U1 und der DE 693 03 763 T2 ist jeweils eine Rolle mit einem derartigen Richtungsfeststeller bekannt.

Beim Transport von beispielsweise schweren Medizingeräten innerhalb eines Krankenhauses hat sich jedoch herausgestellt, dass insbesondere Richtungsänderung in engen Krankenhausfluren oder auch Räumen für eine einzelne Person schwierig durchzuführen sind, wenn dabei manuelle Bedienungsoperationen notwendig sind.

Vor diesem Hintergrund besteht die Aufgabe der Erfindung darin, eine neue Rolle für Apparate, Möbel und insbesondere Medizingeräte zu schaffen, bei der ohne manuelle Bedienung nach einem Richtungswechsel eine automatische Richtungsfeststellung bei Geradeausfahrt herbeigeführt wird.

Die Lösung der Aufgabe ergibt sich aus einer Rolle für Apparate, Möbel und insbesondere Medizingeräte gemäß dem nachfolgenden Anspruch 1:
Rolle für Apparate, Möbel und insbesondere Medizingeräte, mit einem Tragteil, welches aus einem Fußteil und einem Kopfteil gebildet ist, das einen Befestigungsbolzen aufnimmt und dessen Fußteil eine Radachse lagert, an der mindestens ein Rad angeordnet ist, wobei die Rolle einen Richtungsfeststeller aufweist, dadurch gekennzeichnet, dass die Rolle ein bewegliches Blockierelement für den Richtungsfeststeller aufweist, das zumindest mittelbar mit dem Rad im Reibkontakt steht und dass die sich aus dem Reibkontakt ergebene Reibkraft bei Bewegung der Rolle in y-Richtung eine Richtungsfeststellung in y-Richtung hervorruft, dass das Blockierelement mit einer Feder belastet ist, deren Federkraft entgegengesetzt zur Reibkraft wirkt und dass das Blockierelement auf der Radachse schwenkbeweglich angeordnet ist, wobei ein erster Arm des Blockierelementes mit einem Blockiervorsprung versehen ist, der in den Richtungsfeststeller eingreifen kann und wobei ein zweiter Arm des Blockierelementes zumindest mittelbar an der Innenumfangsfläche des Reifens reibschlüssig anliegt..

Der wesentliche erfindungsgemäße Vorteil besteht darin, dass einerseits während der Fahrt in eine Richtung das bewegliche Blockierelement durch die während der Fahrt entstehende und auf das Blockierelement einwirkende Reibkraft eine Geradeausfahrt in der gewünschten Richtung garantiert und andererseits automatisch nach Stillstand der Rolle in der ersten Richtung und Änderung der Richtung sowie Aufnahme der Fahrt in die zweite Richtung eine erneute Blockierung der Richtungsfeststellung erfolgt.

Im Ergebnis wird die das Medizingerät schiebende Person dadurch entlastet, dass keine Hand- oder Fußbetätigung zum Eingreifen der Richtungsfeststellung mehr nötig ist, so dass sich der Transportvorgang deutlich vereinfacht.

Dadurch, dass das Blockierelement mit einer Feder belastet wird, deren Federkraft im Gegensatz zur Reibkraft wirkt, kann nach der Bewegung der Rolle in eine Richtung und dem darauffolgenden Stillstand noch zuverlässiger sichergestellt werden, dass sich nach Wegfall der Reibkraft das Blockierelement aufgrund der Federkraft aus der Blockierstellung im Richtungsfeststeller heraus bewegt.

Durch die Tatsache, dass das Blockierelement auf der Radachse schwenkbeweglich angeordnet ist, wobei ein erster Arm des Blockierelementes mit einem Blockiervorsprung versehen ist, der in den Richtungsfeststeller eingreifen kann und wobei ein zweiter Arm des Blockierelementes zumindest mittelbar am Innenumfang der Radfelge reibschlüssig anliegt, wird erreicht, dass der Richtungsfeststeller sehr gut im Innenraum der Rolle angeordnet werden kann, und auch für Einzel- und Doppelrollen geeignet ist.

Bei einer Ausführungsform ist es auch möglich, dass der freie Endbereich des zweiten Arm des Blockierelementes mit einem als Vorsprung ausgebildeten Betätigungsgewicht versehen ist, dessen von einer Armachse beabstandet angreifende Gewichtskraft bei Stillstand der Rolle ein Drehmoment zur Verfügung steht, mit der die Richtungsfeststellung automatisch aufgehoben wird.

Durch dieses Betätigungsgewicht wird nach Stillstand der Rolle und damit Wegfall der Reibkraft auf zuverlässige Weise das Entsperren des Richtungsfeststellers garantiert.

Weitere Vorteile der Erfindung ergeben sich aus der nachfolgenden Beschreibung eines Ausführungsbeispiels. Es zeigen:
- Figur 1: perspektivische Ansicht von unten eines Medizingerätes,
- Figur 2: perspektivische Ansicht einer mit automatischer Richtungsfeststellung versehener fünften Rolle,
- Figur 3: Querschnittsdarstellung gemäß Schnittlinie III-III in Figur 2,
- Figur 4: Teildarstellung der Rolle gemäß Figur 2 mit Richtungsfeststeller,
- Figur 5: Schnittdarstellung der Rolle gemäß Schnittlinie V-V in Figur 2,
- Figur 6: Schnittdarstellung gemäß Schnittlinie III-III in Figur 2 bei Richtungsfeststellung und
- Figur 7: eine perspektivische Darstellung des Richtungsfeststellers.

In den Zeichnungen ist eine Rolle für Apparate, Möbel und insbesondere Medizingeräte mit einer erfindungsgemäßen Richtungsfeststellung insgesamt mit der Bezugsziffer 10 bezeichnet.

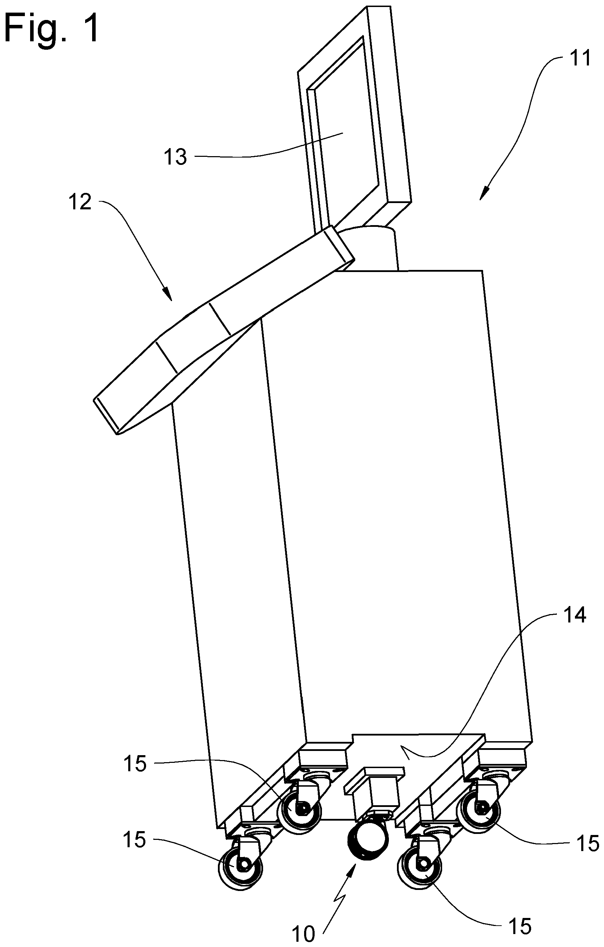

In der Figur 1 ist in perspektivischer Ansicht von unten eine Medizingerät 11 mit einem Eingabefeld 12 und einem Bildschirm 13 zu erkennen. An einer Unterseite 14 sind vier Lenkrollen 15 und eine zentrale fünfte Rolle 10 mit automatischer Richtungsfeststellung angeordnet.

Grundsätzlich ist es auch möglich, dass eine oder mehrere der vier Lenkrollen 15 und nicht eine zusätzliche fünfte Rolle 10 mit einer erfindungsgemäßen automatischen Richtungsfeststellung versehen ist.

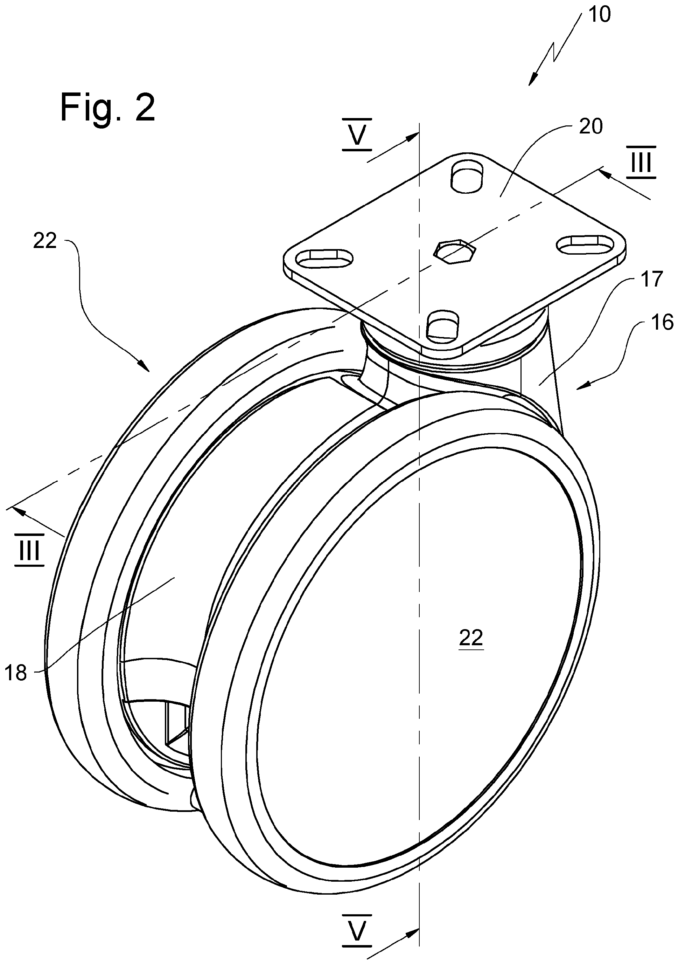

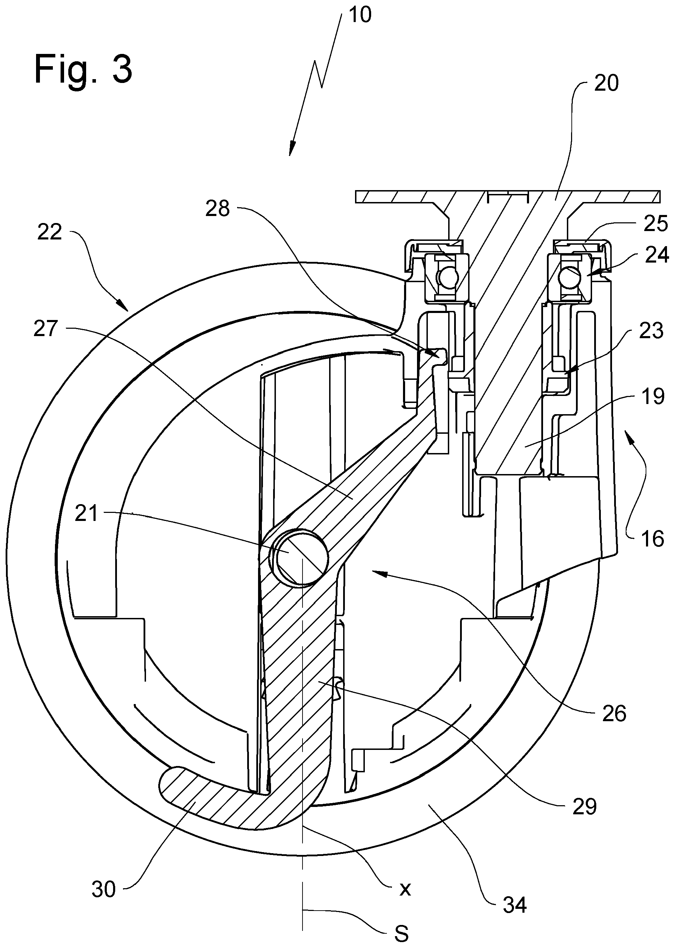

In der Figur 2 ist in perspektivischer Ansicht die vorgenannte fünfte Rolle 10 vergrößert abgebildet. Man erkennt ein Tragteil 16 mit Kopfteil 17 und Fußteil 18. Im Kopfteil 17 des Tragteils 16 ist der Befestigungsbolzen 19 (siehe Figur 3) einschließlich der Anschraubplatte 20 angeordnet, wobei am Fußteil 18 mittels der Radachse 21 (siehe Figur 3) die Räder 22 drehbar befestigt sind.

Eine Schnittdarstellung gemäß Schnittlinie III-III in Figur 2 zeigt die Darstellung gemäß Figur 3. Man erkennt, dass zusätzlich im Tragteil 16 am Befestigungsbolzen 19 die als Richtungsfeststeller 23 dienende Rastscheibe, ein Lager 24 und eine Abdeckkappe 25 angeordnet sind.

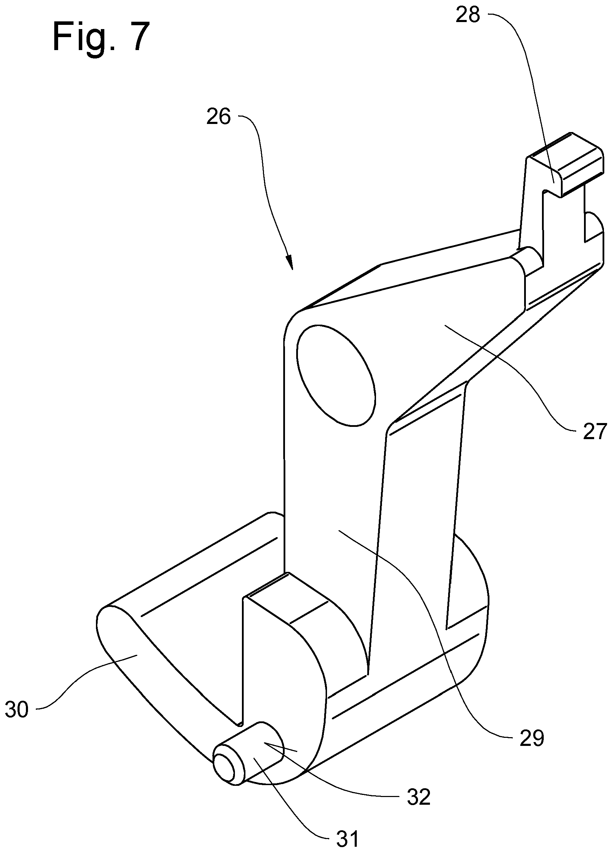

Auf der Radachse 21 ist ein schwenkbewegliches Blockierelement 26 (siehe auch Figur 7) befestigt, dessen erster nach oben ragender Arm 27 mit einem Blockiervorsprung 28 versehen ist, der in die als Richtungsfeststeller 23 fungierende Rastscheibe eingreifen kann.

Ein zweiter Arm 29 erstreckt sich in Schwerkraftrichtung s und weist am Ende ein als seitlicher Vorsprung ausgebildetes Betätigungsgewicht 30 auf, welches von einer Armachse x beabstandet ist und bei Stillstand der Rolle 10 ein Drehmoment zur Verfügung stellt, mit der die Richtungsfeststellung automatisch aufgehoben wird.

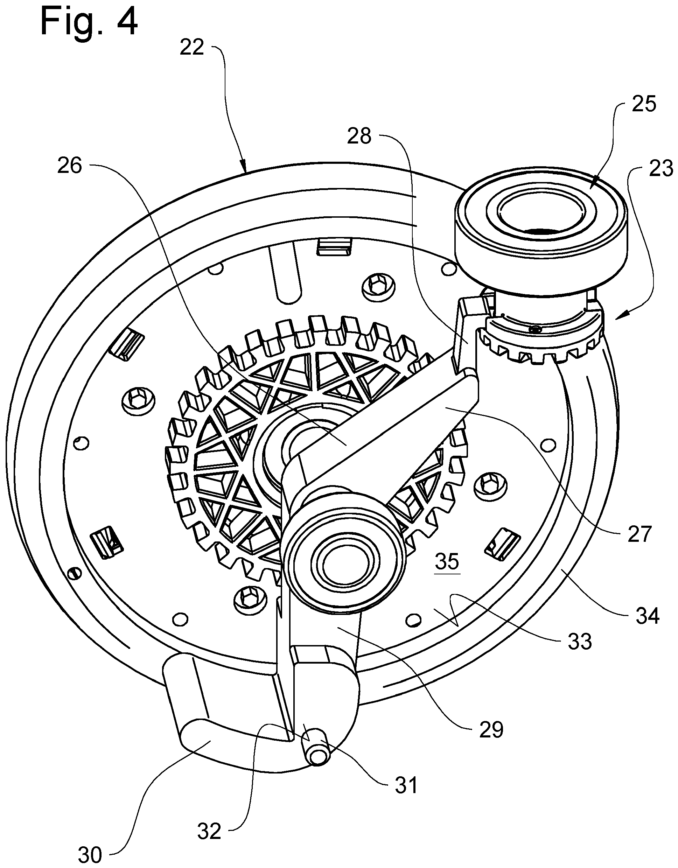

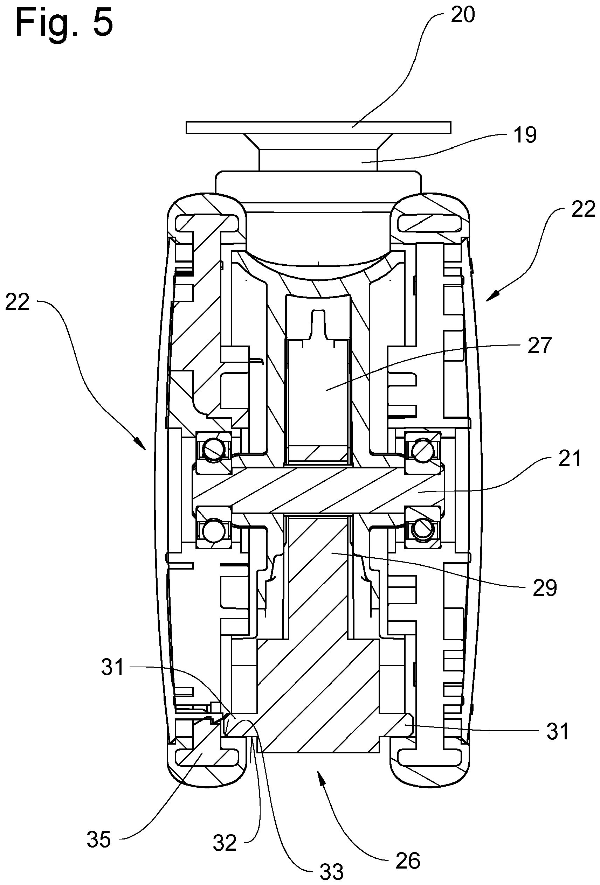

Wie insbesondere in den Figuren 4 und 5 erkennbar, ist am freien Ende des zweiten Arms 29 darüber hinaus beidseitig jeweils ein Reibbolzen 31 angeordnet, dessen Außenumfangsfläche 32 reibschlüssig an einer Innenumfangsfläche 33 des Reifens 34 anliegt, wobei die Reifen 34 formschlüssig auf den Felgen 35 befestigt sind.

In der Figur 3 ist die Entriegelungsstellung dargestellt, das heißt das Blockierelement 26 greift nicht in die Rastscheibe des Richtungsfeststellers 23 ein. Zugleich sind Armachse x und Schwerkraftrichtung s deckungsgleich.

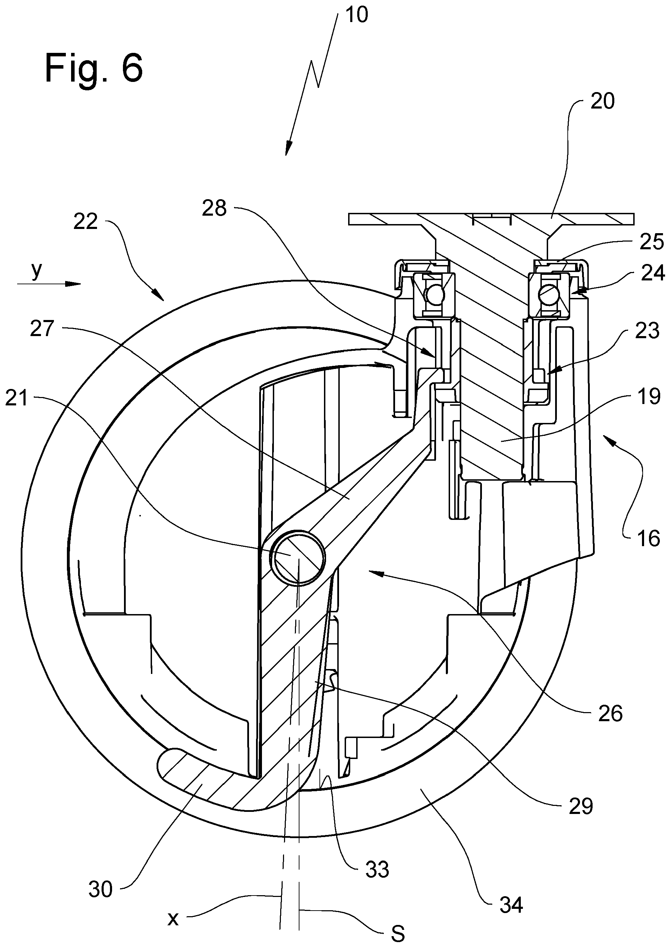

Wenn sich das Rad 22 nun in y-Richtung bewegt, entsteht im Bereich des Reibbolzens 31/der Innenumfangsfläche 33 eine in Uhrzeigerrichtung gerichtete Reibkraft. Durch das sich darauf ergebende Drehmoment bewegt sich das Blockierelement 26 in die in Figur 6 dargestellte Verriegelungsstellung. Konkret greift der Blockiervorsprung 28 in die Rastscheibe des Richtungsfeststellers 23 ein, wodurch eine Richtungsfeststellung in der Geradeausfahrt hervorgerufen wird. Zugleich erkennt man am zweiten Arm 29, dass dieser sich in Uhrzeigerrichtung bewegt hat und nunmehr die Armachse x nicht mehr in Schwerkraftrichtung s verläuft.

Sobald das Rad 22 wieder stillsteht, wird die in Uhrzeigerrichtung gerichtete Reibkraft sowie das zugehörige Drehmoment Null, wodurch sich das Blockierelement 26 aufgrund der Gewichtskraft des Betätigungsgewichts 30 wieder in die Entriegelungsstellung bewegt (siehe Figur 3).

### Bezugszeichenliste

- 10: Rolle mit Richtungsfeststeller
- 11: Medizingerät
- 12: Eingabefeld
- 13: Bildschirm
- 14: Unterseite von 11
- 15: Lenkrolle
- 16: Tragteil
- 17: Kopfteil
- 18: Fußteil
- 19: Befestigungsbolzen
- 20: Tragplatte
- 21: Radachse
- 22: Räder
- 23: Richtungsfeststeller
- 24: Lager
- 25: Abdeckkappe
- 26: Blockierelement
- 27: erster Arm
- 28: Blockiervorsprung
- 29: zweiter Arm
- 30: Betätigungsgewicht
- 31: Reibbolzen
- 32: Außenumfangsfläche
- 33: Innenumfangsfläche
- 34: Reifen
- 35: Felge

- S: Schwerkraftrichtung
- x: Armachse
- y: Fahrtrichtung

## Patentansprüche

1. Rolle (10) für Apparate, Möbel und insbesondere Medizingeräte (11), mit einem Tragteil (16), welches aus einem Fußteil (18) und einem Kopfteil (17) gebildet ist, das einen Befestigungsbolzen (19) aufnimmt und dessen Fußteil (18) eine Radachse (21) lagert, an der mindestens ein Rad (22) angeordnet ist, wobei die Rolle (10) einen Richtungsfeststeller (23) aufweist, **dadurch gekennzeichnet, dass** die Rolle (10) ein bewegliches Blockierelement (26) für den Richtungsfeststeller (23) aufweist, das zumindest mittelbar mit dem Rad (22) im Reibkontakt steht und dass die sich aus dem Reibkontakt ergebene Reibkraft bei Bewegung der Rolle (10) in y-Richtung eine Richtungsfeststellung in y-Richtung hervorruft, dass das Blockierelement (26) mit einer Feder belastet ist, deren Federkraft entgegengesetzt zur Reibkraft wirkt und dass das Blockierelement (26) auf der Radachse (21) schwenkbeweglich angeordnet ist, wobei ein erster Arm (27) des Blockierelementes (26) mit einem Blockiervorsprung (28) versehen ist, der in den Richtungsfeststeller (23) eingreifen kann und wobei ein zweiter Arm (29) des Blockierelementes (26) zumindest mittelbar an der Innenumfangsfläche (33) des Reifens (34) reibschlüssig anliegt.

2. Rolle (10) nach Anspruch 1, **dadurch gekennzeichnet, dass** der freie Endbereich des zweiten Arms (29) des Blockierelementes (26) mit einem als Vorsprung ausgebildeten Betätigungsgewicht (30) versehen ist, dessen von einer Armachse (x) beabstandet angreifende Gewichtkraft bei Stillstand der Rolle (10) ein Drehmoment zur Verfügung stellt, mit der die Richtungsfeststellung automatisch aufgehoben wird.

## Claims

1. Roller (10) for equipment, furniture and in particular medical devices (11), having a support part (16), which is formed from a base part (18) and a top part (17), which receives a fastening bolt (19) and the base part (18) of which supports a wheel axle (21), on which at least one wheel (22) is arranged, wherein the roller (10) has a directional lock (23), **characterised in that** the roller (10) has a moveable blocking element (26) for the directional lock (23), which is at least indirectly in frictional contact with the wheel (22) and that the frictional force resulting from the frictional contact causes a directional locking in the y direction when the roller (10) moves in the y direction, **in that** the blocking element (26) is loaded with a spring, the spring tension of which acts counter to the frictional force, and **in that** the blocking element (26) is arranged pivotably on the wheel axle (21), wherein a first arm (27) of the blocking element (26) is provided with a blocking projection (28), which can engage in the directional lock (23), and wherein a second arm (29) of the blocking element (26) rests at least indirectly with frictional engagement on the inner peripheral surface (33) of the tyre (34).

2. Roller (10) according to claim 1, **characterised in that** the free end area of the second arm (29) of the blocking element (26) is provided with an actuation weight (30) formed as a projection, the weight force of which, acting spaced apart from an arm axis (x), provides a torque when the roller (10) is stationary, with which the directional locking is automatically released.

## Revendications

1. Roulette (10) pour appareils, meubles et en particulier pour appareils médicaux (11), qui comprend une partie de support (16) qui est constituée d'une partie inférieure (18) et d'une partie supérieure (17), qui reçoit un boulon de fixation (19) et dont la partie inférieure (18) supporte un axe de roue (21) sur lequel au moins une roue (22) est agencée, dans laquelle la roulette (10) est équipée d'un dispositif de verrouillage de direction (23), **caractérisée en ce que** la roulette (10) comporte un élément de blocage mobile (26) pour le dispositif de verrouillage de direction (23) qui se trouve au moins indirectement en contact de frottement avec la roue (22), et **en ce que** la force de frottement qui est générée par le contact de frottement provoque un verrouillage de la direction dans la direction y lorsque la roulette (10) se déplace dans la direction y, **en ce que** l'élément de blocage (26) est chargé par un ressort dont la force élastique agit dans la direction opposée à celle de la force de frottement, et **en ce que** l'élément de blocage (26) est disposé de telle sorte qu'il soit capable de pivoter sur l'axe de roue (21), dans laquelle un premier bras (27) de l'élément de blocage (26) est pourvu d'une saillie de blocage (28) pouvant s'engager dans l'élément de verrouillage de direction (23), et dans laquelle un second bras (29) de l'élément de blocage (26) s'appuie au moins indirectement par frottement contre la surface circonférentielle (33) du pneu (34).

2. Roulette (10) selon la revendication 1, **caractérisée en ce que** la région d'extrémité libre du second bras (29) de l'élément de blocage (26) est pourvue d'un poids d'actionnement (30) qui se présente sous la forme d'une saillie et dont la force de gravité qui s'exerce à une certaine distance d'un axe de bras (x) génère un couple de rotation lorsque la roulette (10) est à l'arrêt, couple de rotation sous l'effet duquel le verrouillage de direction est automatiquement relâché.
